# EUROPEAN PATENT SPECIFICATION

(11) **EP 2 646 727 B1**
(45) Date of publication and mention of the grant of the patent: **06.07.2016**
(21) Application number: 10787093.3
(22) Date of filing: 30.11.2010
(51) Int. Cl.: F16L 57/06, F16L 23/024, F16L 9/147

(54) **METAL PIPE HAVING AN ELASTOMERIC COATING**
METALLROHR MIT EINER ELASTOMEREN BESCHICHTUNG
TUYAU MÉTALLIQUE AYANT UN REVÊTEMENT ÉLASTOMÈRE

(43) Date of publication of application: 09.10.2013
(73) Proprietor: Metso Minerals (Sweden) AB, 231 22 Trelleborg (SE)
(72) Inventor: RÖNNERDAG, Olof, S-934 93 Kusmark (SE)
(74) Representative: Awapatent AB
(86) International application number: PCT/EP2010/068525
(87) International publication number: WO 2012/072113

(56) References cited:
- WO-A1-95/24578
- DE-A1- 4 018 753
- GB-A- 2 290 743
- US-A1- 2007 036 982

## Description

### Technical field

The present invention relates to a metal pipe for transporting material in mineral processing plants. The invention also relates to coupling device for coupling a first and a second transporting means, and a system for transporting material in mineral processing plants.

### Background art

When materials are crushed or pulverised in mineral processing plants several different methods can be used. During the crushing process, highly abrasive materials are to be transported throughout the processing plants. The highly abrasive materials are traditionally mixed with water and transported by transporting means consisting of rubber hoses and metal pipes which are internally coated with rubber. Rubber offers a superior wear resistance when handling this kind of abrasive materials. Normally, the rubber hoses are used in the curved portions of the transporting route and the metal pipes in the straight portions of the transporting route.

The present invention relates to an improved metal pipe and a coupling device for simplified coupling between the different types of transporting means, primarily between metal pipes and rubber hoses or pipes such as those discussed in US 2007/036982 A. The rubber hoses and metal pipes are today coupled to each other by attaching a coupling device at the ends of each rubber hose and a flange at the ends of each metal pipe. The flanges are welded to the outer ends of the metal pipe to be attached. The coupling devices of the rubber hoses are then attached to the flanges of the metal pipes in order to create a satisfying overall length for transportation of the material throughout the plants. The importance of creating sufficient and reliable connections between the transporting means is vital and the consequences of failure along the route of transportation would be catastrophic.

There are problems associated with the above mentioned technique of connecting the transporting means to each other. The flanges are expensive to manufacture and to attach to the metal pipes. Additionally, the transportation of the metal pipes before mounting is made difficult due to the shape of the same when the flanges have been attached.

### Summary of the invention

It is an object of the present invention to provide an improvement of the above mentioned technique and prior art. More particularly, it is an object of the present invention to provide an improved metal pipe which simplifies the coupling to other transporting means. Further, it is an object of the present invention to provide a coupling device for coupling a first and a second transporting means, and a system for transporting material in mineral processing plants.

These and other objects as well as advantages that will be apparent from the following description of the present invention are achieved by a metal pipe, a coupling device and a system for transporting material in mineral processing plants according to the independent claims.

A metal pipe for transporting material in mineral processing plants is provided. The metal pipe has a first and a second end portion. The metal pipe is characterised in that an outer circumferential surface of the first end portion is coated with an elastomeric coating. This is advantageous in that due to the inventive elastomeric coating, the earlier needed flanges on the metal pipe for coupling to another transporting means are no longer necessary. The same type of coupling device used for rubber hoses can now also be used for the metal pipe. The coupling device is simply attached to and surrounding the outer circumferential surface metal pipe coated with the elastomeric coating. Attachment means provided on the inner circumferential surface of the coupling device penetrate the elastomeric coating for rigid and stable coupling between the metal pipe and another transporting means. Accordingly, the problem of the expensive manufacture and attachment of the flanges to the metal pipe is eliminated. Further, the metal pipes are easier to transport when having no flanges in a dimension perspective.

The outer circumferential surface of the second end portion may be coated with an elastomeric coating, which is advantageous in that the above mentioned advantageous now apply for both ends of the metal pipe.

The elastomeric coating may be vulcanized onto said outer circumferential surface, which creates a satisfying and very stable attachment of the elastomeric coating to the metal pipe. Other binding methods are generally not sufficient in this type of attachment process.

The elastomeric coating may be rubber. Rubber exhibits the required characteristics for this type of application and is accordingly a preferred material.

The rubber may have a hardness of 50 to 80°shore A, preferably about 60°shore A, which is a preferred hardness.

The metal pipe may be made of high-strength steel. High-strength steel exhibits the required characteristics for this type of application and is accordingly a preferred material.

The coupling device may comprise a sleeve portion adapted to surround an outer circumferential surface of one of said transporting means, and a flange portion adapted to be connected to a corresponding flange portion of another coupling device. The coupling device is characterised in that said sleeve portion in an inner circumferential surface comprises attachment means. This is advantageous in that the same type of coupling device may be used for any type of transporting means. The coupling device is simply attached to and surrounding the outer circumferential surface metal pipe coated with the elastomeric coating. Inventive attachment means provided on the inner circumferential surface of the coupling device penetrate the elastomeric coating for rigid and stable coupling to the transporting means. Due to the fact that the same coupling device may be used for any type of transporting means, the overall costs of a transporting route comprising such transporting means is heavily decreased.

The attachment means may be chosen from the group consisting of protrusions, recesses, wavy surfaces, and plain surfaces. Naturally, other attachment means are also possible.

The coupling device may be dividable, which makes it easy to mount. It is accordingly also easy to detach if necessary.

The coupling device may be made of aluminium. Aluminium exhibits the required characteristics for this type of application and is accordingly a preferred material.

The invention may be used for transporting material in mineral processing plants. The system comprises at least a first and a second transporting means. The first transporting means is a metal pipe according to the features above and the second transporting means is chosen from the group consisting of metal pipes according to the features above and elastomeric hoses, and at least two coupling devices according to the features above. The first and second transporting means are coupled to each other at a respective end portion by means of said coupling devices.

Generally, all terms used in the claims are to be interpreted according to their ordinary meaning in the technical field, unless explicitly defined otherwise herein. All references to "a/an/the [element, device, component, means, etc]" are to be interpreted openly as referring to at least one instance of said element, device, component, means, etc., unless explicitly stated otherwise.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a perspective view of one embodiment of a metal pipe used in the present invention,
Fig. 2 is a perspective view of the metal pipe of Fig. 1, and coupling devices according to present invention,
Figs. 3-5 are perspective views of three different embodiments of metal pipes used in accordance with the invention, and
Fig. 6 is a perspective view of a system making use of the present invention.

### Detailed description of preferred embodiments of the invention

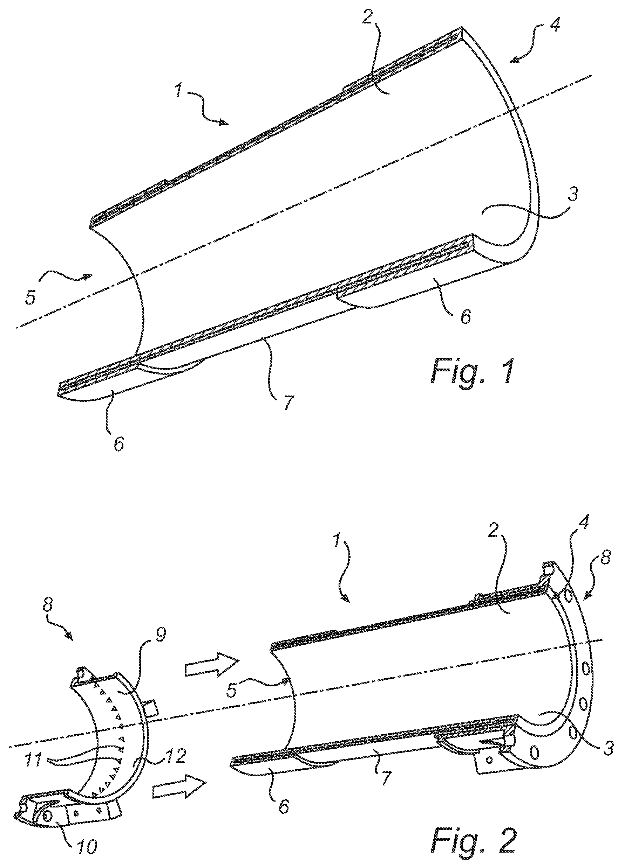

Fig. 1 illustrates one embodiment of a metal pipe 1 for transporting material in mineral processing plants The metal pipe 1 is hollow and has a cylindrical shape. The metal pipe 1 is made of high-strength steel and has on its inner circumferential surface 2 a rubber coating 3. The rubber coating 3 offers a superior wear resistance when transporting abrasive materials. The metal pipe 1 has a having a first and a second end portion 4, 5. The metal pipe 1 is coated with an elastomeric coating 6 on the outer circumferential surface 7 of the first and second end portions 4, 5. The elastomeric coating 6 is constituted by rubber and is vulcanized onto the outer circumferential surface 7. The preferred hardness of the rubber is preferably about 70°shore A. However, the elastomeric coating 6 may naturally be of any other elastomeric material having the same or a different suitable hardness. Also, the metal pipe 1 may be made of other suitable materials than high-strength steel.

In Fig. 2, the metal pipe 1 is illustrated when being provided with a coupling device 8 according to a second aspect of the present invention on the first and second end portions 4, 5, respectively. The function of the coupling devices 8 is to attach each of the first and second end portions 4, 5 of the metal pipe 1 to another transporting means. The further transporting means may for example consist of another metal pipe or a rubber hose. The coupling device 8 comprises a sleeve portion 9 adapted to surround the outer circumferential surface of the metal pipe 1, and a flange portion 10 adapted to be connected to a corresponding flange portion of another coupling device attached to another transporting means. The sleeve portion 9 has attachment means 11 on an inner circumferential surface 12. When the coupling device 8 is to be attached to the metal pipe 1, it is arranged so that the sleeve portion 9 surrounds the outer circumferential surface 7 of the metal pipe 1. This way, the attachment means 11 penetrate the elastomeric coating 6 of the metal pipe 1 and thus a rigid and stable coupling to the metal pipe 1 is provided. The coupling device 8 is dividable for easy mounting to and detachment from the metal pipe 1. After mounting of the coupling device 8 to the metal pipe 1, the coupling device 8 can be coupled together with a corresponding coupling device 8 attached to another transporting means, thereby coupling the metal pipe 1 and the transporting means together. The coupling device 8 is preferably made of aluminium. However, other material is naturally also possible.

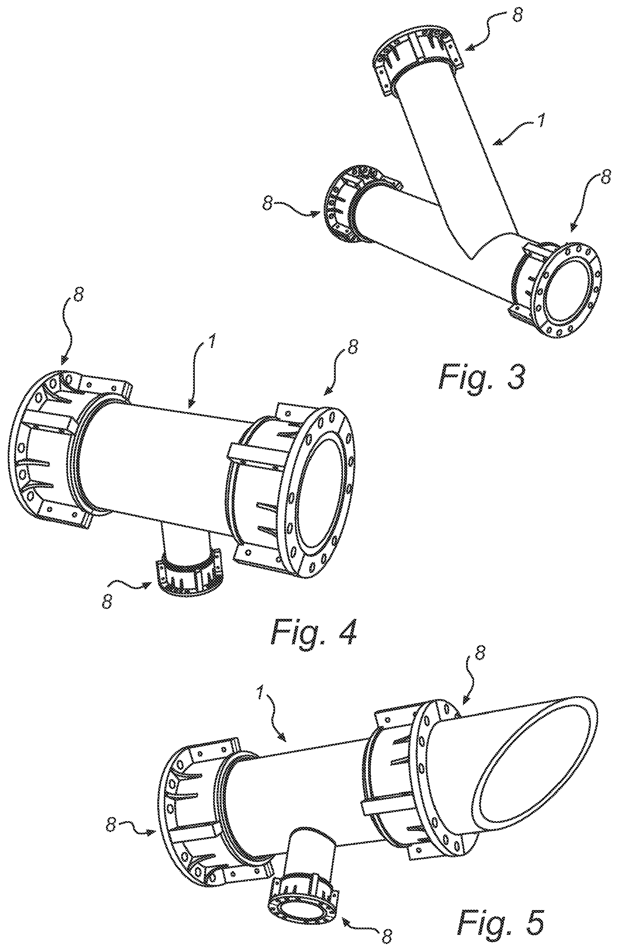

Fig. 3 illustrates a second embodiment of the metal pipe 1 This embodiment comprises a branching and is used when additional transporting means are necessary. Three coupling devices 8 are attached to the metal pipe 1.

In Fig. 4, a third embodiment of the metal pipe 1 is illustrated. This embodiment comprises a T-pipe and is used when additional transporting means are necessary. Three coupling devices 8 are attached to the metal pipe 1.

Fig. 5 illustrates a fourth embodiment of the metal pipe 1 This embodiment is used for coupling to a reservoir. Three coupling devices 8 are attached to the metal pipe 1.

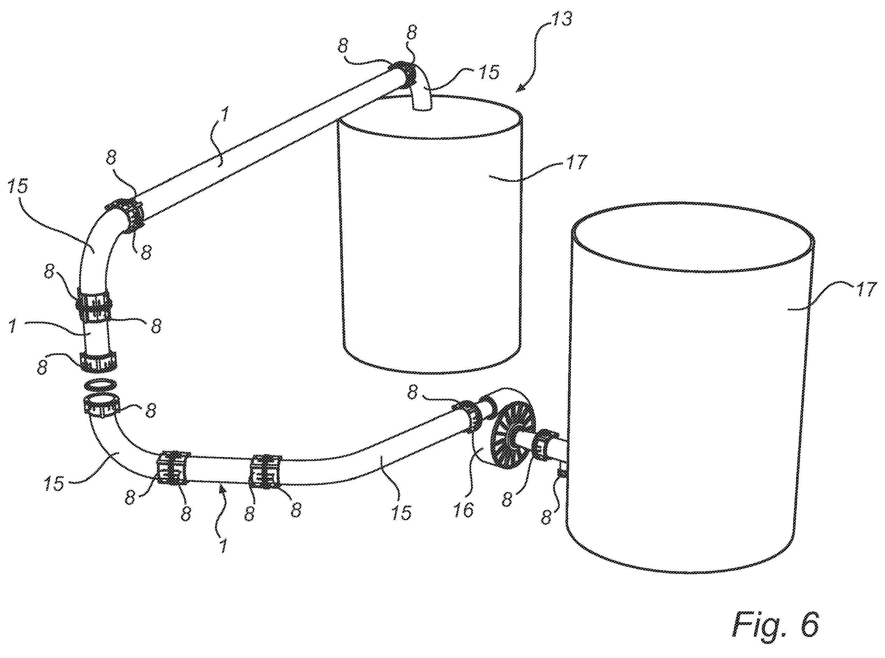

In Fig. 6, a system 13 for transporting material in mineral processing plants The system 13 comprises four metal pipes 1, four rubber hoses 15, fifteen coupling devices 8, a pump 16 and two reservoirs 17.

The invention has mainly been described above with reference to a few embodiments. However, as is readily appreciated by a person skilled in the art, other embodiments than the ones disclosed above are equally possible within the scope of the invention, as defined by the appended claims. Accordingly, the size and shape of the metal pipe, the coupling device and the system according to the present invention may be varied in a vast number of different embodiments without deviating from the scope of the invention.

## Claims

1. Metal pipe (1) for transporting material in mineral processing plants, said metal pipe (1) having a first and a second end portion (4, 5), wherein an outer circumferential surface (7) of said first and second end portions (4, 5) is coated with an elastomeric coating (6) adapted to receive an attachment means (11) of a coupling device (8),
wherein an inner circumferential surface (2) of said metal pipe (1) is coated with an elastomeric coating (3) adapted to resist wear during transport of said material;
**characterized in that** said outer circumferential surface (7), between said first and second end portions (4, 5), is free from said elastomeric coating (6); and
a coupling device (8) is attached to at least one of said first and second end portion (4, 5) and surrounds the outer circumferential surface (7) of the metal pipe (1) coated with elastomeric coating, wherein said coupling device (8) comprises a sleeve portion (9) surrounding said outer circumferential surface (7), and a flange portion (10) adapted to be connected to a corresponding flange or another coupling device, and wherein attachment means (11) are provided on the inner circumferential surface (12) of the coupling device (8) adapted to penetrate the elastomeric coating (6) for rigid and stable attachment between said coupling device (8) and said pipe (1).

2. Metal pipe (1) according to claim 1, wherein said elastomeric coating (6) is vulcanized onto said outer circumferential surface (7).

3. Metal pipe (1) according to any one of the preceding claims, wherein said elastomeric coating (6) is rubber.

4. Metal pipe (1) according to claim 3, wherein said rubber has a hardness of 50 to 80°shore A, preferably about 60°shore A.

5. Metal pipe (1) according to any one of the preceding claims, wherein said metal pipe (1) is made of high-strength steel.

## Patentansprüche

1. Metallrohr (1) zum Transportieren von Material in Erzaufbereitungsanlagen, wobei das Metallrohr (1) einen ersten und einen zweiten Endabschnitt (4, 5) aufweist, wobei eine Außenumfangsfläche (7) des ersten und des zweiten Endabschnitts (4, 5) mit einer elastomeren Beschichtung (6) beschichtet ist, die eingerichtet ist, um ein Befestigungsmittel (11) einer Kopplungsvorrichtung (8) aufzunehmen,
wobei
eine Innenumfangsfläche (2) des Metallrohrs (1) mit einer elastomeren Beschichtung (3) beschichtet ist, die eingerichtet ist, um Verschleiß beim Transports des Materials zu widerstehen;
**dadurch gekennzeichnet, dass** die
Außenumfangsfläche (7) zwischen dem ersten und dem zweiten Endabschnitt (4, 5) frei von der elastomeren Beschichtung (6) ist; und
eine Kopplungsvorrichtung (8) an mindestens einem von dem ersten und dem zweiten Endabschnitt (4, 5) befestigt ist und die Außenumfangsfläche (7) des Metallrohrs (1) umgibt, das mit elastomerer Beschichtung beschichtet ist, wobei die Kopplungsvorrichtung (8) einen Hülsenabschnitt (9), der die Außenumfangsfläche (7) umgibt, und einen Flanschabschnitt (10) aufweist, der eingerichtet ist, um mit einem entsprechenden Flansch oder einer anderen Kopplungsvorrichtung verbunden zu werden, und wobei Befestigungsmittel (11) an der Innenumfangsfläche (12) der Kopplungsvorrichtung (8) bereitgestellt sind, die eingerichtet sind, um zur starren und stabilen Befestigung zwischen der Kopplungsvorrichtung (8) und dem Rohr (1) in die elastomere Beschichtung (6) einzudringen.

2. Metallrohr (1) nach Anspruch 1, wobei die elastomere Beschichtung (6) auf der Außenumfangsfläche (7) aufvulkanisiert ist.

3. Metallrohr (1) nach einem der vorhergehenden Ansprüche, wobei die elastomere Beschichtung (6) aus Kautschuk ist.

4. Metallrohr (1) nach Anspruch 3, wobei der Kautschuk eine Härte von 50 bis 80° Shore A, vorzugsweise von etwa 60° Shore A, aufweist.

5. Metallrohr (1) nach einem der vorhergehenden Ansprüche, wobei das Metallrohr (1) aus hochfestem Stahl hergestellt ist.

## Revendications

1. Tuyau métallique (1) destiné au transport de matériau dans des usines de traitement de minéraux, ledit tuyau métallique (1) ayant une première et une seconde parties d'extrémité (4, 5), dans lesquelles une surface périphérique externe (7) desdites première et seconde parties d'extrémité (4, 5) est recouverte d'un revêtement élastomérique (6) adapté pour recevoir un moyen d'attache (11) d'un dispositif de couplage (8),
dans lequel une surface périphérique interne (2) dudit tuyau métallique (1) est recouverte d'un revêtement élastomérique (3) adapté pour résister au transport dudit matériau ;
**caractérisé en ce que** ladite surface périphérique externe (7), entre lesdites première et seconde parties d'extrémité (4, 5), est exempte dudit revêtement élastomérique (6) ; et
un dispositif de couplage (8) est attaché à au moins une desdites première et seconde parties d'extrémité (4, 5) et entoure la surface périphérique externe (7) du tuyau métallique (1) recouvert d'un revêtement élastomérique, dans lequel ledit dispositif de couplage (8) comprend une partie de manchon (9) entourant ladite surface périphérique externe (7), et une partie de bride (10) adaptée pour être connectée à une bride ou à un autre dispositif de couplage, et dans lequel les moyens d'attache (11) sont fournis sur la surface périphérique interne (12) du dispositif de couplage (8) adapté pour pénétrer le revêtement élastomérique (6) pour une attache rigide et stable entre ledit dispositif de couplage (8) et tuyau métallique (1).

2. Tuyau métallique (1) selon la revendication 1, dans lequel ledit revêtement élastomérique (6) est vulcanisé sur la surface périphérique externe (7).

3. Tuyau métallique (1) selon l'une quelconque des revendications précédentes, dans lequel ledit revêtement élastomérique (6) est de la gomme.

4. Tuyau métallique (1) selon la revendication 3, dans lequel ladite gomme possède une dureté shore A comprise entre 50 et 80, de préférence une shore A d'environ 60.

5. Tuyau métallique (1) selon l'une quelconque des revendications précédentes, dans lequel ledit tuyau métallique (1) est constitué d'acier à haute résistance.
